# EUROPÄISCHE PATENTSCHRIFT

(11) **EP 1 318 615 B1**
(45) Veröffentlichungstag und Bekanntmachung des Hinweises auf die Patenterteilung: **13.07.2005**
(21) Anmeldenummer: 02016799.5
(22) Anmeldetag: 26.07.2002
(51) Int. Cl.: H04B 3/36, H04L 5/14, H04L 25/24

(54) **Verstärker für Vor- und Rückwegsignale**
Bidirectional amplifier
Amplificateur bidirectionnel

(30) Priorität: 05.12.2001 EP 01128922
(43) Veröffentlichungstag der Anmeldung: 11.06.2003
(73) Patentinhaber: General Instrument Corporation, Horsham, Pennsylvania 19044 (US)
(72) Erfinder: Schmidt, Rainer, 39446 Löderburg (DE); Widera, Günter, 31135 Hildesheim (DE); Stascheit, Bernhard, 38118 Braunschweig (DE)
(74) Vertreter: Bohnenberger, Johannes, Dr.

(56) Entgegenhaltungen:
- US-A- 5 774 458

## Beschreibung

Die Erfindung betrifft einen Verstärker gemäß Anspruch 1.

Verstärker für Vor- und Rückwegsignale werden insbesondere in Kabelnetzwerken eingesetzt. Hierbei ist ein Vorwegkanal als Frequenzband ausgebildet, in dem die Vorwegsignale von einem zentralen Verteilerknoten an eine Vielzahl von Empfängern, beispielsweise Set-Top-Boxen, übertragen werden. Um Signale von einem Empfänger zurück zu einem Verteilerknoten zu übertragen, ist ein Rückwegkanal vorgesehen, der durch ein Frequenzband gebildet wird, das sich von dem Frequenzband des Vorwegkanals unterscheidet. Somit können in verschiedenen Frequenzbändern Signale in unterschiedliche Richtungen über beispielsweise ein Koaxialkabel oder auch einen Lichtwellenleiter in einem Kabel- bzw. optischen Netzwerk übertragen werden.

Im folgenden wird der Einfachheit halber nur noch von Kabelnetzwerk oder Kabelsystem gesprochen. Allerdings ist dies nicht einschränkend zu verstehen. Ebenso kann die Technologie prinzipiell auch vorteilhaft für optische Netzwerke verwendet werden.

In einem Kabelnetzwerk dient der Rückwegkanal in der Regel zur Übertragung von Steuerinformationen von beispielsweise einer Set-Top-Box zu einer Zentrale oder einem Verteilerknoten. Dort können die Steuerinformationen ausgewertet werden. Besondere Bedeutung gewinnt der Rückwegkanal für sogenannte Kabelmodems. Diese nutzen den Vorwegkanal zum Download und den Rückwegkanal zum Upload von Daten.

In Deutschland existieren im Kabelnetzwerk derzeit zwei unterschiedliche Frequenzbereichsaufteilungin für die Übertragung von Vor- und Rückwegsignalen. Die erste Aufteilung nutzt das Frequenzspektrum von 5-30 MHz als Rückweg bzw. Rückbereich und 47-862 MHz als Vorweg bzw. Vorwärtsbereich. Für den Vorweg steht damit deutlich mehr Bandbreite als für den Rückweg zur Verfügung. Die Vorwegbandbreite dient vor allem für die Übertragung von Nachrichtensignalen, während über den Rückweg in der Regel Steuersignale übertragen werden. Bei einer zweiten Aufteilung in Deutschland liegt der Rückweg im Bereich von 5-65 MHz und der Vorweg im Bereich von 85-862 MHz. D.h. die Bandbreite des Vorwegs ist etwas geringer und die Bandbreite des Rückwegs etwas größer als bei der ersten Aufteilung.

Diese Aufteilungen des zur Signalübertragung zur Verfügung stehenden Frequenzspektrums sind in der Regel länder- und normenspezifisch. In den USA existieren daher andere Aufteilungen des Frequenzspektrums in Kabelnetzwerken als in Deutschland.

Bisher wurden Verstärker für Vor- und Rückwegsignale durch Diplexer-Anordnungen relaisiert. Allerdings weisen Diplexer-Anordnungen verschiedene Nachteile auf: eine hohe Rückdämpfung und verschiedene Rückkopplungen der Amplitudenantwort der verschiedenen eingesetzten Filter. Um diese Nachteile zu vermeiden, wurden bisher zwei Diplexer-Anordnungen in Reihe geschaltet. Insbesondere wurden Schaltungsteile der Diplexer kombiniert, um die erwähnten Nachteile zu vermeiden. Durch die Verwendung von zwei Diplexer-Anordnungen sind darauf basierende Verstärker technisch aufwendig und in der Produktion teuer.

Die oben erläuterten Verstärker für Kabelnetzwerke sind üblicherweise an eine bestimmte Frequenzaufteilung angepaßt. Das ist nachteilig, da für den Einsatz in unterschiedlichen Kabelnetzwerken in verschiedenen Ländern auch entsprechend angepaßte Verstärker angeboten werden müssen. Zudem sind derartige Verstärker kostenintensiv, da sie sowohl für den Vorweg als auch für den Rückweg separate Komponenten wie Filter und Verstärkerelemente beinhalten. Ein wesentlicher Nachteil besteht zudem darin, dass die Bandbreite des Rückweges sehr viel kleiner als die des Vorweges und dies nicht ohne weiteres änderbar ist. Eine Veränderung der Bandbreite für die einzelnen Übertragungsbereiche ist mit einem erheblichen technischen Aufwand, insbesondere einem Auswechseln frequenzbestimmender Komponenten wie beispielsweise Filter, verbunden.

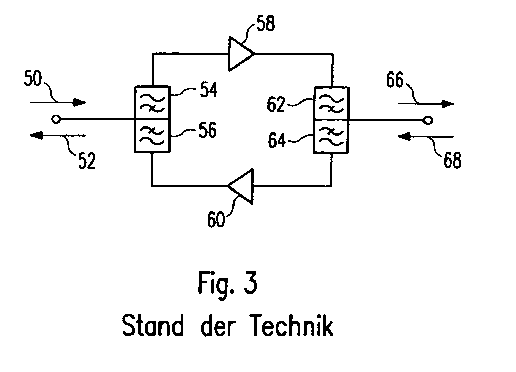

Fig. 3 zeigt ein Ausführungsbeispiel eines bekannten Verstärkers für Vor- und Rückwegsignale für ein Kabelnetzwerk. Er umfasst zwei nahezu vollständig getrennte Signalpfade für die Vor- und Rückwegsignale. Vorwegeingangssignale 50 werden über ein erstes Hochpaßfilter 54 einem Vorweg-Verstärkerelement 58 zugeführt. Dessen Ausgangssignale werden wiederum über ein zweites Hochpaßfilter 62 geführt und als Vorwegausgangssignale 66 des Verstärkers weitergeleitet, beispielsweise an einen Empfänger wie eine Set-Top-Box im Kabelnetzwerk. Umgekehrt gelangen Rückwegeingangssignale 68 von beispielsweise einer Set-Top-Box an einen ersten Tiefpaßfilter 64, und werden an ein darauf folgendes Rückweg-Verstärkerelement 60 geführt. Mit dessen Ausgang ist ein zweites Tiefpaßfilter 56 verschaltet, das die verstärkten Signale als Rückwegausgangssignale 52 an beispielsweise einen Verteilerknoten im Kabelnetzwerk überträgt.

Aus Kostengründen sind bei diesem Verstärker die Komponenten im Vor- als auch Rückweg an die Bandbreite der zu verarbeitenden Signale angepaßt. Dadurch sind auch die Grenzfrequenzen und damit die Durchlaßbereiche fest vorgegeben, so dass der Verstärker nur für eine ganz bestimmte Frequenzaufteilung einsetzbar ist.

Aufgabe der vorliegenden Erfindung ist es, einen Verstärker für Vor- und Rückwegsignale anzugeben, der einfacher als die bekannten Verstärker für Vor- und Rückwegsignale aufgebaut ist.

Diese Aufgabe wird durch einen Verstärker mit den Merkmalen nach Anspruch 1 gelöst. Bevorzugte Ausgestaltungen des Verstärkers ergeben sich aus den abhängigen Ansprüchen.

Ein wesentlicher Gedanke der Erfindung besteht darin, die für die Verarbeitung von Vorwegsignalen vorgesehenen Komponenten eines Verstärkers zumindest teilweise auch für Rückwegsignale zu nutzen. Da die Vorwegsignale insbesondere in Kabelnetzwerken eine sehr viel größere Bandbreite als die Rückwegsignale aufweisen und zudem in höheren Frequenzbereichen liegen, sind die zur Verarbeitung von Vorwegsignalen vorgesehenen Komponenten entsprechend ausgelegt und prinzipiell auch für die Verarbeitung von Rückwegsignalen geeignet. Vor allem das Verstärkerelement für Vorwegsignale ist in der Regel ein breitbandiger Verstärker, der vorteilhaft ebenso für die Verstärkung der Rückwegsignale genutzt werden kann. Durch die Erfindung kann eine teuere Komponente - nämlich das Verstärkerelement für Rückwegsignale - eingespart werden. Dadurch wird ein kostengünstigerer Verstärker geschaffen, der weniger Komponenten als herkömmliche Verstärker für Vor- und Rückwegsignale benötigt - bei gleicher Funktionalität. Zudem ist der erfindungsgemäße Verstärker flexibel und einfacher an Änderungen der Frequenzbereiche, beispielsweise Bereichsveränderungen, anpassbar. Bei Bereichsveränderungen sind lediglich die Filter zu ändern, d.h. deren Übertragungsbereiche bzw. Grenzfrequenzen entsprechend der gewünschten Änderung anzupassen.

Konkret betrifft die Erfindung einen Verstärker, insbesondere für ein Kabelnetzwerk, für Vor- und Rückwegsignale, die in verschiedenen Frequenzbändern übertragen werden. Der Verstärker umfasst
- einen ersten und zweiten Anschluß,
- ein gemeinsames Verstärkerelement für Vor- und Rückwegsignale,
- ein erstes und zweites Vorwegsignal-Filter, und
- ein erstes und zweites Rückwegsignal-Filter.

Ein Eingang des Verstärkerelements ist mit einem Ausgang des ersten Vorwegsignal-Filters und mit einem Ausgang des ersten Rückwegsignal-Filters, ein Ausgang des Verstärkerelements mit einem Eingang des zweiten Vorwegsignal-Filters und einem Eingang des zweiten Rückwegsignal-Filters, der erste Anschluß mit dem Ausgang des zweiten Rückwegsignal-Filters und dem Eingang des ersten Vorwegsignal-Filters, und der zweite Anschluß mit dem Ausgang des zweiten Vorwegsignal-Filters und dem Eingang des ersten Rückwegsignal-Filters verschaltet.

Ein derartiger Verstärker kann beispielsweise vorteilhaft in bereits existierenden Kabelnetzwerken oder auch in neuen Kabeisystemen sowie in optischen Netzwerken eingesetzt werden. Durch die obige Verschaltung wird ein vom Aufbau im wesentlichen symmetrischer Verstärker geschaffen. Im Prinzip sind die Vorweg- und Rückwegsignal-Filter "ringförmig" angeordnet. Zwei Verbindungspunkte dieser "ringförmigen" Anordnung bilden dann den ersten und zweiten Anschluß. Ein weiterer Vorteil besteht darin, dass an jeder Verbindung von Filtern Signale eingespeist oder abgegriffen werden können. Zudem sind benachbarte Anschlüsse "spektral" verbunden, wie beispielsweise der erste und zweite Anschluß. Andere Anschlüsse oder Verbindungen sind dagegen "spektral" isoliert. Insgesamt weist der erfindungsgemäße Verstärker ein geringere Komplexität als bekannte Verstärker auf. Dadurch wird weniger Platz für den erfindungegemäßen Verstärker benötigt, wodurch er wiederum kostengünstig zu realisieren ist. Zudem kann der erfindungsgemäße Verstärker optimal innerhalb und außerhalb des gemeinsamen Verstärkerelements an Randbedingungen, insbesondere seine Einsatzgebiete angepaßt werden, beispielsweise durch eine bestimmte Auswahl der Filterelemente und des Verstärkerelements. Schließlich werden die Anforderungen an die Selektrionseigenschaften eines derartigen Verstärkers gegenüber bekannten technischen Lösungen reduziert, da nur ein gemeinsames Verstärkerelement für den Vor- und Rückweg eingesetzt wird.

Vorzugsweise sind die Vorwegsignal- und Rückwegsignal-Filter derart ausgebildet, daß die an ihren Verbindungen mit jeweils anderen Filtern im wesentlichen gleiche Impedanzen aufweisen.

Insbesondere sind die Übertragungs- und Impedanzverhältnisse zwischen zwei oder mehreren Anschlüssen im wesentlichen gleich.

In einer bevorzugten Ausführungsform weisen der erste und zweite Anschluß im wesentlichen gleiche Anschlußimpedanzen auf. Hierdurch sind keine zusätzlichen Schaltungen zum Anpassen der Anschlußimpedanzen erforderlich.

Die Vorwegsignal- und Rückwegsignal-Filter können mindestens eine Serienschaltung und/oder Parallelschaltung einer Vielzahl von Filtern umfassen. Hierbei ist eine erste Vielzahl von Filtern der mindestens einen Serienschaltung und/oder Parallelschaltung für Vorwegsignale und eine zweite Vielzahl von Filtern der mindestens einen Serienschaltung für Rückwegsignale vorgesehen. Die Zuordnung der Signalrichtungen ist also nicht zwangsweise mit einem bestimmten Filtertyp verbunden. Im Prinzip sind für die Übertragung der Vor- und Rückwegsignale beliebige Zusammenschaltungen von Filtern möglich.

Das Verstärkerelement kann ein Breitbandverstärker sein. Dessen Verstärkungskennlinie sollte einen Frequenzbereich überstreichen, der die Frequenzbänder für Vorweg- und Rückwegsignale umfasst.

Vorzugsweise ist der Verstärker im wesentlichen symmetrisch aufgebaut. Durch Vertauschen von ersten und zweiten Anschluß kann der Verstärker dadurch ohne Probleme "gedreht" betrieben werden.

Zwischen den ersten Anschluß und den Ausgang des zweiten Rückwegsignal-Filters und den Eingang des ersten Vorwegsignal-Filters kann ein Equalizer geschaltet sein, der zur Anpassung an eine angeschlossene Übertragungsleitung, insbesondere ein Koaxialkabel dient.

Um zusätzliche Signalblöcke in den Rückweg einkoppeln zu können, kann zwischen den Eingang des Verstärkerelements und den Ausgang des ersten Rückwegsignal-Filters eine Signaleinkoppelanordnung vorgesehen sein.

Ferner kann zwischen den Eingang des Verstärkerelements und der Signalkoppelanordnung eine Signalpegel-Einstelleinrichtung geschaltet sein, die beispielsweise zum Einstellen der Pegel der Rückwegsignale dient.

Vorzugsweise verarbeitet der Verstärker elektrische Signale. Alternativ kann er auch optische Signale verarbeiten.

Eine bevorzugte Verwendung des erfindungsgemäßen Verstärkers betrifft ein Kabelnetzwerk. Ebenso vorteilhaft kann der erfindungsgemäße Verstärker in einem optischen Netzwerk verwendet werden. Insbesondere kann der erfindungsgemäße Verstärker jedoch in beliebigen Schaltungen und/oder Netzwerken eingesetzt werden, in denen spektrale Signale in verschiedene Frequenzbereiche aufgeteilt oder -getrennt bzw. aus verschiedenen Frequenzbereichen kombiniert und über gemeinsame Leitungen übertragen werden müssen.

Der erfindungsgemäße Verstärker kann auch "gedreht" eingesetzt werden, d.h. der Vorweg wird mit dem Rückweg vertauscht. Anpassungen des Verstärkers sind hierzu im wesentlichen nicht erforderlich. Durch diese "Drehung" wird der Signalfluß der spektralen Signale ebenfalls umgekehrt bzw. invertiert.

Die Erfindung wird nachfolgend anhand von Ausführungsbeispielen eines Verstärkers für Vor- und Rückwegsignale in Verbindung mit den Zeichnungen erläutert. Die Zeichnungen zeigen in
- Fig. 1: ein erstes Ausführungsbeispiel eines erfindungsgemäßen Verstärkers für Vor- und Rückwegsignale,
- Fig. 2: ein zweites Ausführungsbeispiel eines erfindungsgemäßen Verstärkers für Vor- und Rückwegsignale, und in
- Fig. 3: einen aus dem Stand der Technik bekannten Verstärker für Vor- und Rückwegsignale in einem Kabelnetzwerk.

Zur Beschreibung von Fig. 3 wird auf die Beschreibungseinleitung verwiesen.

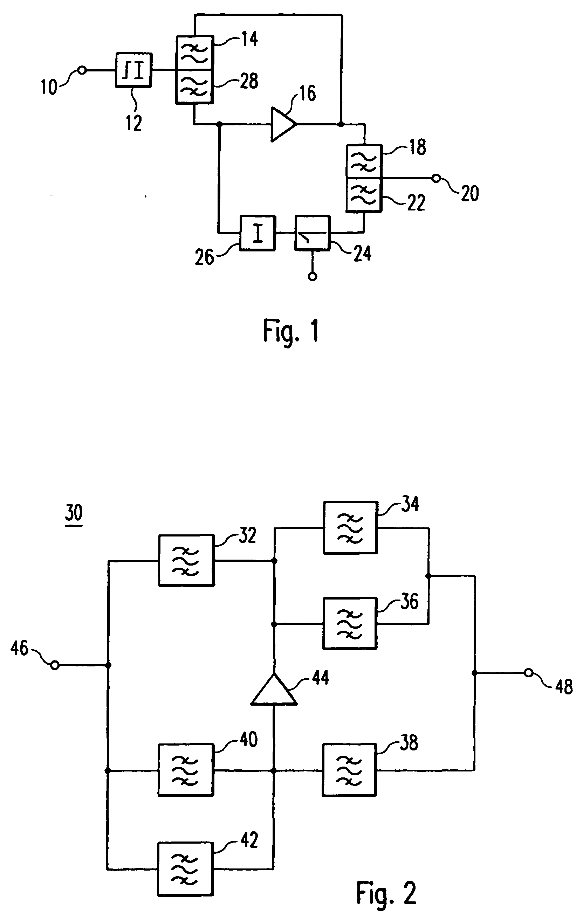

Der in Fig. 1 abgebildete Verstärker ist zum Einsatz in einem Kabelnetzwerk vorgesehen, in dem Vorwegsignale in einem hohen und Rückwegsignale in einem niedrigen Frequenzbereich übertragen werden. Das Kabelnetzwerk kann beispielsweise zur Übertragung von Fernsehsignalen dienen. Der hohe und niedrige Frequenzbereich ist jeweils einseitig begrenzt, so dass Hoch- und Tiefpassfilter zum Trennen der beiden Frequenzbereiche eingesetzt werden können.

Der Verstärker weist einen ersten Anschluß 10 auf, der als Eingang für Vorwegsignale und Ausgang für Rückwegsignale dient. Der Anschluß 10 ist mit einem (nicht dargestellten) ersten Koaxialkabel verbunden, um Signale mit einem Verteilerknoten des Kabelnetzwerks austauschen zu können. Ein Equalizer 12 dient zum Linearisieren der Amplitudenantwort des Koaxialkabels über den gesamten, für die Übertragung von Vor- und Rückkwegsignalen, zur Verfügung stehenden Frequenzbereich.

Vorwegsignale werden vom Equalizer 12 über ein erstes Hochpaßfilter 28 dem Eingang eines Breitband-Vertärkerelements 16 zugeführt. Das erste Hochpaßfilter 28 filtert aus dem empfangen Signalspektrum die Vorwegsignale aus. Der Durchlaßbreich des ersten Hochpaßfilters 28 entspricht daher im wesentlichen dem Frequenzbereich für die Vorwegsignale.

Nach Verstärkung der Vorwegsignale durch das Breitband-Verstärkerelement 16 werden diese durch ein zweites Hochpaßfilter 18 gefiltert und an einem zweiten Anschluß 20 des Verstärkers zur Verfügung gestellt. Mit dem zweiten Anschluß 20 ist ein (nicht dargestelltes) zweites Koaxialkabel verbunden, das den Verstärker beispielsweise mit einem ans Kabelnetzwerk angeschlossenen Endgerät wie eine Set-Top-Box oder ein Kabelmodem oder mit einem Verteilerknoten oder einem weiteren Verstärker verbindet.

Der zweite Anschluß 20 dient somit als Ausgang für Vorwegsignale und Eingang für Rückwegsignale. Das über das zweite Koaxialkabel empfangene Signalspektrum wird demnach über den zweiten Anschluß 20 einem ersten Tiefpaßfilter 22 zugeführt. Dieses filtert die empfangenen Rückwegsignale und leitet sie einer Signaleinkoppelanordnung 24 zu.

Die Signaleinkoppelanordnung 24 dient zum Einkoppeln von zusätzlichen Signalen oder Signalblöcken in den Rückwegsignalfluß. Die der Signaleinkoppelanordnung 24 nachgeschaltete Signalpegel-Einstelleinrichtung 26 ist zum Beeinflussen der Pegel der Rückwegsignale vorgesehen. Vorzugsweise sind die über die Signaleinkoppelanordnung 24 einzukoppelnden Signale spektral konvertierte Signalblöcke, welche spektral vollständig die Rückwegsignale darstellen. Dadurch kann mittels entsprechender Rückkonvertierung in beispielsweise einer Kopfstation des Kabelnetzwerks der ursprüngliche Inhalt der zusätzlich eingekoppelten Signale zurück gewonnen werden.

Stellt man sich den Verstärker der Fig. 1 als Verteilpunkt in einem Kabelnetzwerk vor, so gelangen von einem Endgerät eines Teilnehmers kommende Rückwegsignale an diesen Verteilpunkt. Um gleich geartete Signale über die Signaleinkoppelanordnung 24 in den Rückwegsignalfluß einzukoppeln, ohne die vom Endgerät des Teilnehmers kommenden Rückwegsignale zu beeinflussen, müssen die einzukoppelnden Signale frequenzmäßig und/oder zeitlich verschoben werden. Dies kann in zusätzlichen Einrichtungen erfolgen, die nicht dargestellt sind. Die derart zeitlich und/oder frequenzmäßig verschobenen Signale werden dann über die Signaleinkoppelanordnung 24 in den Rückwegsignalfluß eingekoppelt, ohne die Rückwegsignale vom Endgerät des Teilnehmers zu beeinflussen. Mit der Signalpegel-Einstelleinrichtung 26 können unter anderem dann noch die Pegel der Rückwegsignale am Eingang des Verstärkerelements 16 beeinflußt werden.

Von der Signalpegel-Einstelleinrichtung 26 werden die Rückwegsignale an den Eingang des Breitband-Verstärkerelements 16 geführt, von diesem verstärkt und über ein zweites Tiefpaßfilter 14 dem Equalizer 12 zugeführt. Dieser verzerrt die zugeführten verstärkten Rückwegsignale vor und stellt sie am ersten Anschluß 10 zur Verfügung. Über das erste Koaxialkabel können dann die Rückwegsignale an beispielsweise einen (nicht dargestellten) Verteilerknoten oder eine (nicht dargestellte) Verstärkerstation übertragen werden.

Fig. 2 zeigt einen Verstärker 30, bei dem im Unterschied zum Verstärker von Fig. 1 die Frequenzbereiche für Vor- und Rückwegsignale beidseitig begrenzt sind. In dem Verstärker 30 werden daher Bandpaßfilter zum Begrenzen und Trennen der Frequenzbereiche für Vor- und Rückwegsignale eingesetzt. Wesentlich ist bei diesem Verstärker, dass ein erster und ein zweiter Frequenzbereich für die Übertragung von Vorwegsignalen vorgesehen ist. Ein derartiger Verstärker wird vorzugsweise in Kabel-Netzwerken eingesetzt, in denen mehrere Übertragungsbereiche für Vorwegsignale existieren.

Der Verstärker 30 weist wie der Verstärker in Fig. 1 einen ersten Anschluß 46 als Eingang für Vorwegsignale und Ausgang für Rückwegsignale auf. An diesen Anschluß 10 kann beispielsweise ein (nicht dargestellten) ersten Koaxialkabel angeschlossen werden, um Signale mit einem Verteilerknoten des Kabelnetzwerks austauschen zu können. Wie beim Verstärker von Fig. 1 kann auch diesem Verstärker 30 ein (in Fig. 2 nicht dargestellter) Equalizer vorgesehen werden, um die Amplitudenantwort des Koaxialkabels über den gesamten, für die Übertragung von Vor- und Rückwegsignalen zur Verfügung stehenden Frequenzbereich zu linearisieren.

Über den ersten Anschluß 46 empfangenen Vorwegsignale werden bei diesem Verstärker parallel einem ersten und einem zweiten Bandpaßfilter 40 bzw. 42 zugeführt. Die Ausgangssignale der beiden Bandpaßfilter 40 und 42 werden dem Eingang eines Breitband-Vertärkerelements 44 zugeführt. Das erste Bandpaßfilter 40 filtert aus dem empfangen Signalspektrum erste Vorwegsignale aus. Ebenso filtert das zweite Bandpaßfilter 42 aus dem empfangen Signalspektrum zweite Vorwegsignale aus. Die Durchlaßbereiche des ersten und zweiten Hochpaßfilters 40 bzw. 42 entsprehcen im wesentlichen den unterschiedlichen Frequenzbereichen für die ersten und zweiten Vorwegsignale.

Mit dem Ausgang des Breitband-Verstärkerelements 44 sind parallel ein drittes und viertes Bandpaßfilter 34 bzw. 36 verbunden. Das dritte Bandpaßfilter 34 ist an den Frequenzbereich des ersten Bandpaßfilters 40, das vierte Bandpaßfilter 36 an den Frequenzbereich des zweiten Bandpaßfilters 43 angepaßt. Mit anderen Worten ist das dritte Bandpaßfilter 34 für die ersten, das vierte Bandpaßfilter 36 für die zweiten Vorwegsignale vorgesehen. Mit den beiden Bandpaßfiltern 34 und 36 werden die ersten und zweiten Vorwegsignale nach der Verstärkung durch das Breitband-Verstärkerelement 44 von unerwünschten Frequenzkomponenten außerhalb des jeweiligen Frequenzbereiches für die ersten und zweiten Vorwegsignale befreit. Nach der Filterung durch das dritte und vierte Bandpaßfitler 34 bzw. 36 werden die ersten und zweiten Vorwegsignale an einem zweiten Anschluß 48 des Verstärkers 30 zur Verfügung gestellt. Mit dem zweiten Anschluß 48 ist wiederum ein (nicht dargestelltes) zweites Koaxialkabel verbunden, das den Verstärker 30 beispielsweise mit einem ans Kabelnetzwerk angeschlossenen Endgerät wie eine Set-Top-Box oder ein Kabelmodem oder mit einem Verteilerknoten oder einem weiteren Verstärker verbindet.

Der zweite Anschluß 48 dient wie beim Verstärker von Fig. 1 gleichzeitig als Ausgang für Vorwegsignale und Eingang für Rückwegsignale. Der Verstärker 30 ist wie der Verstärker von Fig. 1 für die Übertragung von Rückwegsignalen in einem frequenzmäßig beidseitig begrenzte Frequenzbereich ausgelegt. Demnach wird das über das zweite Koaxialkabel empfangene Signalspektrum über den zweiten Anschluß 48 einem fünften Bandpaßfilter 38 zugeführt, das die empfangenen Rückwegsignale aus dem zugeführten Signalspektrum filtert und diese dem Eingang des Breitband-Verstärkerelements 44 zur Verstärkung zuführt.

Die derart verstärkten Rückwegsignale werden einem sechsten Bandpaßfilter 32 zugeführt. Das sechste Bandpaßfilter 32 weist im wesentlichen den gleichen Durchlaßbereich wie das fünfte Bandpaßfilter 38 auf. Der Ausgang des sechsten Bandpaßfilters 32 ist mit dem ersten Anschluß 46 verbunden, an dem die verstärkten Rückwegsignale zur Verfügung stehen. Über das erste Koaxialkabel können wiederum die Rückwegsignale an beispielsweise einen (nicht dargestellten) Verteilerknoten oder eine (nicht dargestellte) Verstärkerstation übertragen werden.

Es sei noch erwähnt, dass als Bandpaßfilter beispielsweise LC-Filterelemente niedriger Ordnung eingesetzt werden können. Hierdurch können beim Verstärker 30 Bauteile eingespart werden, wodurch ein derartiger Verstärker kostengünstig implementiert werden kann. Ferner können die Filter beim erfindungsgemäßen Verstärker derart ausgelegt sein, dass die Übertragungs- und Impedanzverhältnisse zwischen beliebigen und/oder gleichartigen Anschlüssen nahezu identisch sind, beispielsweise dass die Übertragungs- und Impedanzverhältnisse am ersten und zweiten Anschluss der Verstärkers von Fig. 1 und 2 etwa gleich sind. Insbesondere weisen alle eingesetzten Filter an ihren Verbindungsstellen gleiche Impedanzverhältnisse auf, so dass keine Schaltung zur Impedanzanpassung erforderlich sind. Alle nach außen geführte Anschlüsse, also insbesondere der erste und zweite Anschluss, sollten etwa gleiche Anschlussimpedanzen besitzen, um Impedanzanpaßschaltungen zu vermeiden.

Der erfindungsgemäße Verstärker kann auch vorteilhaft in Verstärkerstationen von Kabelnetzwerken und in Kompaktverstärkern eingesetzt werden. Ebenso kann der erfindungsgemäße Verstärker in Systemen eingesetzt werden, in denen es möglich sein soll, den Signalfluß während des Betriebs umzukehren.

### Bezugszeichen

- 10: 1. Anschluß
- 12: Equalizer
- 14: 2. Rückwegsignal-Filter (2. Tiefpaßfilter)
- 16: Verstärkerelement (Breitband-Verstärkerelement)
- 18: 2. Vorwegsignal-Filter (2. Hochpaßfilter)
- 20: 2. Anschluß
- 22: 1. Rückwegsignal-Filter (1. Tiefpaßfilter)
- 24: Signaleinkoppelanordnung
- 26: Signalpegel-Einstelleinrichtung
- 28: 1. Vorwegsignal-Filter (1. Hochpaßfilter)
- 30: Verstärker für Vor- und Rückwegsignale
- 32: 6. Vorwegsignal-Filter (6. Bandpaßfilter)
- 34: 3. Vorwegsignal-Filter (3. Bandpaßfilter)
- 36: 4. Vorwegsignal-Filter (4. Bandpaßfilter)
- 38: 5. Vorwegsignal-Filter (5. Bandpaßfilter)
- 40: 1. Vorwegsignal-Filter (1. Bandpaßfilter)
- 42: 2. Vorwegsignal-Filter (2. Bandpaßfilter)
- 44: Verstärkerelement (Breitband-Verstärkerelement)
- 46: 1. Anschluß
- 48: 2. Anschluß
- 50: Vorwegeingangssignale
- 52: Rückwegausgangssignale
- 54: 1. Hochpaßfilter
- 56: 2.Tiefpaßfilter
- 58: Downstream-Verstärkerelement
- 60: Upstream-Verstärkerelement
- 62: 2. Hochpaßfilter
- 64: 1. Tiefpaßfilter
- 66: Vorwegausgangssignale
- 68: Rückwegeingangssignale

## Patentansprüche

1. Verstärker für Vor- und Rückwegsignale, insbesondere für ein Kabelnetzwerk, wobei die Signale in verschiedenen Frequenzbändern übertragen werden, mit
- einem ersten und einem zweiten Anschluß (10, 20; 46, 48), **gekennzeichnet, durch**
- ein gemeinsames Verstärkerelement (16; 44) für Vor- und Rückwegsignale,
- ein erstes und zweites Vorwegsignal-Filter (18, 28; 34, 36, 40, 42),
- ein erstes und zweites Rückwegsignal-Filter (14, 22; 32, 38),
wobei
ein Eingang des Verstärkerelements (16; 44) mit einem Ausgang des ersten Vorwegsignal-Filters (28; 40, 42) und mit einem Ausgang des ersten Rückwegsignal-Filters (22; 38),
ein Ausgang des Verstärkerelements (16; 44) mit einem Eingang des zweiten Vorwegsignal-Filters (18; 34, 36) und einem Eingang des zweiten Rückwegsignal-Filters (14; 32),
der erste Anschluß (10; 46) mit dem Ausgang des zweiten Rückwegsignal-Filters (14; 32) und dem Eingang des ersten Vorwegsignal-Filters (2840, 42), und
der zweite Anschluß (20; 48) mit dem Ausgang des zweiten Vorwegsignal-Filters (18; 34, 36) und dem Eingang des ersten Rückwegsignal-Filters (22; 38) verschaltet ist.

2. Verstärker nach Anspruch 1,
**dadurch gekennzeichnet, daß**
die Vorwegsignal- und Rückwegsignal-Filter (14, 18, 22, 28; 32, 34, 36, 38, 40, 42) mindestens eine Serienschaltung und/oder Parallelschaltung einer Vielzahl von Filtern umfassen, wobei eine erste Vielzahl von Filtern (34, 36, 40, 42) der mindestens einen Serienschaltung und/oder Parallelschaltung für Vorwegsignale und eine zweite Vielzahl von Filtern der mindestens einen Serienschaltung und/oder Parallelschaltung für Rückwegsignale vorgesehen sind.

3. Verstärker nach einem der vorhergehenden Ansprüche,
**dadurch gekennzeichnet, daß**
die Vorwegsignal- und Rückwegsignal-Filter (14, 18, 22, 28; 32, 34, 36, 38, 40, 42) derart ausgebildet sind, daß die an ihren Verbindungen mit jeweils anderen Filtern im wesentlichen gleiche Impedanzen aufweisen.

4. Verstärker nach einem der vorhergehenden Ansprüche,
**dadurch gekennzeichnet, daß**
die Übertragungs- und Impedanzverhältnisse zwischen zwei oder mehreren Anschlüssen (10, 20; 46, 48) im wesentlichen gleich sind.

5. Verstärker nach Anspruch 4,
**dadurch gekennzeichnet, daß**
der erste und zweite Anschluß (10, 20; 46, 48) im wesentlichen gleiche Anschlußimpedanzen aufweisen.

6. Verstärker nach einem der vorhergehenden Ansprüche,
**dadurch gekennzeichnet, daß**
das Verstärkerelement (16) ein Breitband-Verstärkerelement ist.

7. Verstärker nach einem der vorhergehenden Ansprüche,
**dadurch gekennzeichnet, daß**
er im wesentlichen symmetrisch aufgebaut ist.

8. Verstärker nach einem der vorhergehenden Ansprüche,
**dadurch gekennzeichnet, daß** zwischen den ersten Anschluß (10) und den Ausgang des zweiten Rückwegsignal-Filters (14) und den Eingang des ersten Vorwegsignal-Filters (28) ein Equalizer (12) geschaltet ist.

9. Verstärker nach einem der vorhergehenden Ansprüche,
**dadurch gekennzeichnet, daß**
zwischen den Eingang des Verstärkerelements (16) und den Ausgang des ersten Rückwegsignal-Filters (22) eine Signaleinkoppelanordnung (24) zum Einkoppeln von zusätzlichen Signalen in die Rückwegsignale vorgesehen ist.

10. Verstärker nach Anspruch 9,
**dadurch gekennzeichnet, daß** zwischen den Eingang des Verstärkerelements (16) und die Signaleinkoppelanordnung (24) eine Signalpegel-Einstelleinrichtung (26) geschaltet ist.

11. Verstärker nach einem der vorhergehenden Ansprüche,
**dadurch gekennzeichnet, daß**
er elektrische Signale verarbeitet.

12. Verstärker nach einem der Ansprüche 1-10,
**dadurch gekennzeichnet, daß**
er optische Signale verarbeitet.

13. Verwendung eines Verstärkers nach einem der Ansprüche
1 bis 11 in einem Kabelnetzwerk.

14. Verwendung eines Verstärkers nach einem der Ansprüche 1
bis 10 und 12 in einem optischen Netzwerk.

## Claims

1. Bidirectional amplifier, in particular for a cable network, wherein the signals are transmitted in different frequency bands, with
- a first and a second terminal (10, 20; 46, 48),
**characterised by**
- a common amplifier element (16; 44) for forward and return signals,
- a first and second forward signal filter (18, 28; 34, 36, 40, 42),
- a first and second return signal filter (14, 22; 32, 38), wherein
an input of the amplifier element (16; 44) is connected to an output of the first forward signal filter (28; 40, 42) and to an output of the first return signal filter (22; 38),
an output of the amplifier element (16; 44) is connected to an input of the second forward signal filter (18; 34, 36) and an input of the second return signal filter (14; 32),
the first terminal (10; 46) is connected to the output of the second return signal filter (14; 32) and the input of the first forward signal filter (28; 40, 42), and
the second terminal (20; 48) is connected to the output of the second forward signal filter (18; 34, 36) and the input of the first return signal filter (22; 38).

2. Amplifier according to Claim 1,
**characterised in that**
the forward signal and return signal filters (14, 18, 22, 28; 32, 34, 36, 38, 40, 42) comprise at least one series connection and/or parallel connection of a plurality of filters, wherein a first plurality of filters (34, 36, 40, 42) of the at least one series connection and/or parallel connection are provided for forward signals and a second plurality of filters of the at least one series connection and/or parallel connection are provided for return signals.

3. Amplifier according to either of the preceding Claims,
**characterised in that**
the forward and return signal filters (14, 18, 22, 28; 32, 34, 36, 38, 40, 42) are formed such that they have substantially the same impedances at their connections with respective other filters.

4. Amplifier according to any one of the preceding Claims,
**characterised in that**
the transmission and impedance ratios between two or more terminals (10, 20; 46, 48) are substantially the same.

5. Amplifier according to Claim 4,
**characterised in that**
the first and second terminal (10, 20; 46, 48) have substantially the same terminal impedances.

6. Amplifier according to any one of the preceding Claims,
**characterised in that**
the amplifier element (16) is a wide-band amplifier element.

7. Amplifier according to any one of the preceding Claims,
**characterised in that**
it is constructed so as to be substantially symmetrical.

8. Amplifier according to any one of the preceding Claims,
**characterised in that**
an equalizer (12) is connected between the first terminal (10) and the output of the second return signal filter (14) and the input of the first forward signal filter (28).

9. Amplifier according to any one of the preceding Claims,
**characterised in that**
a signal coupling arrangement (24) is provided between the input of the amplifier element (16) and the output of the first return signal filter (22) to couple additional signals into the return signals.

10. Amplifier according to Claim 9,
**characterised in that**
a signal level adjustment device (26) is connected between the input of the amplifier element (16) and the signal coupling arrangement (24).

11. Amplifier according to any one of the preceding Claims,
**characterised in that**
it processes electrical signals.

12. Amplifier according to any one of Claims 1-10,
**characterised in that**
it processes optical signals.

13. Use of an amplifier according to any one of Claims 1 to 11 in a cable network.

14. Use of an amplifier according to any one of Claims 1 to 10 and 12 in an optical network.

## Revendications

1. Amplificateur de signaux d'avance et de retour, en particulier pour un réseau de câbles, dans lequel les signaux sont transmis dans différentes bandes de fréquence, comportant
- un premier et un second raccordements (10, 20 ; 46, 48),
**caractérisé par** :
- un élément amplificateur commun (16 ; 44) pour les signaux d'avance et de retour,
- un premier et un second filtres de signal d'avance (18, 28 ; 34, 36, 40, 42),
- un premier et un second filtres de signal de retour (14, 22 ; 32,38),
dans lequel sont connectés
une entrée de l'élément amplificateur (16 ; 44) avec une sortie du premier filtre de signal d'avance (28 ; 40, 42) et avec une sortie du premier filtre de signal de retour (22 ; 38),
une sortie de l'élément amplificateur (16 ; 44) avec une entrée du second filtre de signal d'avance (18 ; 34, 36) et une entrée du second filtre de signal de retour (14; 32),
le premier raccordement (10 ; 46) avec la sortie du second filtre de signal de retour (14 ; 32) et l'entrée du premier filtre de signal d'avance (28 ; 40, 42), et
le second raccordement (20 ; 48) avec la sortie du second filtre de signal d'avance (18 ; 34, 36) et l'entrée du premier filtre de signal de retour (22 ; 38)

2. Amplificateur selon la revendication 1, **caractérisé en ce que** les filtres de signal d'avance et de signal de retour (14, 18, 22, 28 ; 32, 34, 36, 38, 40, 42) comprennent au moins un circuit série et/ou un circuit parallèle d'un certain nombre de filtres, un premier nombre de filtres (34, 36, 40, 42) du au moins un circuit série et/ou circuit parallèle étant prévu pour les signaux d'avance, et un second nombre de filtres du au moins un circuit séne et/ou circmt parallèle étant prévu pour les signaux de retour.

3. Amplificateur selon l'une des revendications précédentes, **caractérisé en ce que** les filtres de signal d'avance et de signal de retour (14, 18, 22, 28 ; 32, 34, 36, 38, 40, 42) sont conçus de façon telle qu'ils présentent essentiellement les mêmes impédances au niveau de leurs connexions avec respectivement d'autres filtres

4. Amplificateur selon l'une des revendications précédentes, **caractérisé en ce que** les rapports de transmission et d'impédance entre deux ou plusieurs raccordements (10, 20 ; 46, 48) sont essentiellement identiques.

5. Amplificateur selon la revendication 4, **caractérisé en ce que** le premier et le second raccordements (10, 20 ; 46, 48) présentent des impédances terminales essentiellement identiques.

6. Amplificateur selon l'une des revendications précédentes, **caractérisé en ce que** l'élément amplificateur (16) est un élément amplificateur à large bande.

7. Amplificateur selon l'une des revendications précédentes, **caractérisé en ce qu'**il est conçu pour être essentiellement symétrique.

8. Amphficateur selon l'une des revendications précédentes, **caractérisé en ce qu'**entre le premier raccordement (10) et la sortie du second filtre de signal de retour (14) et l'entrée du premier filtre de signal d'avance (28) est placé un égaliseur (12).

9. Amplificateur selon l'une des revendications précédentes, **caractérisé en ce qu'**entre l'entrée de l'élément amplificateur (16) et la sortie du premier filtre de signal de retour (22) est prévue une installation de couplage de signal (24) permettant d'introduire des signaux supplémentaires dans les signaux de retour.

10. Amplificateur selon la revendication 9, **caractérisé en ce qu'**entre l'entrée de l'élément amplificateur (16) et l'installation de couplage de signal (24) est connecté un dispositif de réglage du niveau de signal (26).

11. Amplificateur selon l'une des revendications précédentes, **caractérisé en ce qu'**il traite des signaux électriques.

12. Amplificateur selon l'une des revendications 1 à 10, **caractérisé en ce qu'**il traite des signaux optiques.

13. Utilisation d'un amplificateur selon l'une des revendications 1 à 11 dans un réseau de câbles

14. Utilisation d'un amplificateur selon l'une des revendications 1 à 10 et 12 dans un réseau optique.
